# EUROPÄISCHE PATENTSCHRIFT

(11) **EP 3 981 626 B1**
(45) Veröffentlichungstag und Bekanntmachung des Hinweises auf die Patenterteilung: **10.04.2024**
(21) Anmeldenummer: 21194454.1
(22) Anmeldetag: 02.09.2021
(51) Int. Cl.: B60J 5/06, B60J 7/16

(54) **SEITENPLANE UND AUFBAU EINES NUTZFAHRZEUGS**
SIDE TARPAULIN AND STRUCTURE OF A COMMERCIAL VEHICLE
BÂCHES LATÉRALES ET CONSTRUCTION D'UN VÉHICULE UTILITAIRE

(30) Priorität: 08.10.2020 DE 102020126429
(43) Veröffentlichungstag der Anmeldung: 13.04.2022
(73) Patentinhaber: Schmitz Cargobull AG, 48341 Altenberge (DE)
(72) Erfinder: DERKS, Roger Geradus Christiaan, 5922 XT Venlo (NL); RAUß, Niklas, 48432 Rheine (DE)
(74) Vertreter: Cohausz & Florack

(56) Entgegenhaltungen:
- EP-A1- 2 529 966
- EP-A1- 3 599 119
- DE-A1-102017 115 890
- GB-A- 2 469 559

## Beschreibung

Die Erfindung betrifft eine Seitenplane eines Planenaufbaus eines Nutzfahrzeugs, insbesondere Lastkraftwagen, Anhänger oder Sattelauflieger, mit einem flächigen Planenmaterial, wobei das Planenmaterial einen vorderen Rand, einen dem vorderen Rand gegenüberliegenden hinteren Rand, einen den vorderen Rand mit dem hinteren Rand verbindenden oberen Rand und einen den vorderen Rand mit dem hinteren Rand verbindenden unteren Rand aufweist, wobei in einer geglätteten Stellung der Seitenplane mit dem Planenmaterial, dem vorderen Rand, dem hinteren Rand, dem oberen Rand und dem unteren Rand wenigstens im Wesentlichen in einer gemeinsamen Planenebene das Planenmaterial wenigstens im Wesentlichen faltenfrei angeordnet ist und wobei in der geglätteten Stellung der Seitenplane der vordere Rand und der hintere Rand in einer Projektion des vorderen Rands und des hinteren Rands in einer Richtung wenigstens im Wesentlichen parallel zur gemeinsamen Planenebene sowie senkrecht zum vorderen Rand und/oder zum hinteren Rand aufeinander in einer Projektionsstellung zueinander angeordnet sind. Ferner betrifft die Erfindung einen Aufbau, insbesondere Curtainsider, eines Nutzfahrzeugs mit wenigstens einem Längsholm und wenigstens einer Seitenplane, wobei die Seitenplane an dem Längsholm längs des Längsholms von einer eine Seitenwand verschließenden geschlossenen Stellung in eine die Seitenwand zum Be- und Entladen freigebende geöffnete Stellung verschiebbar aufgehängt ist. Nutzfahrzeuge der genannten Art, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Neben Kofferaufbauten sind zudem sogenannte Planenaufbauten bekannt, wie z.B. aus GB 2 469 559 A, EP 3 599 119 A1, DE 10 2017 115890 A1 und EP 2 529 966 A1, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Seitenplane entlang der Seitenwand verschoben werden kann, spricht man auch von sogenannten Curtainsidern. Das Dach von Curtainsidern weist typischerweise seitlich angeordnete Holmstrukturen in Form von Längsholmen auf, die unter Bildung einer Rahmenstruktur quer zum Nutzfahrzeug über Spriegel miteinander verbunden sind. Zudem sind der Stirnwand und der Rückwand zugeordnete Querträger vorgesehen, welche die Längsholme miteinander verbinden. Die Rahmenstruktur trägt dann die das Dach verschließende Plane, wobei das Dach von vorderen und hinteren Eckrungen getragen und gegenüber dem Ladeboden zum Aufstellen der Ladung im Laderaum abgestützt wird. Bedarfsweise können, insbesondere bei geschlossenem Aufbau, zwischen den Eckrungen noch Mittelrungen vorgesehen sein, die ebenfalls das Dach gegenüber dem Ladeboden abstützen.

Die Seitenplanen von Aufbauten in Form von Curtainsidern sind an den Längsholmen des Dachs aufgehängt und können entlang der Längsholme nach vorne oder nach hinten verschoben werden. Auf diese Weise können die Seitenplanen in eine geschlossene Stellung gebracht werden, in der die Seitenplanen die zugehörige Seitenwand verschließen. Zur Freigabe der Seitenwand zum Be- und Entladen des Laderaums kann die Seitenplane eine geöffnete Stellung am vorderen Ende des Aufbaus oder am hinteren Ende des Aufbaus verschoben werden.

Die mit Schiebeverdecken versehenen Aufbauten weisen in vielen Fällen zusätzlich ein höhenverstellbares Dach auf. Dabei kann das Dach insgesamt oder nur der hintere Teil des Dachs, mithin der hintere Querträger des Dachs angehoben und wieder abgesenkt werden. Dies dient dazu auch höhere Ladung transportieren oder das Dach zur Verbesserung des Luftwiderstands rückseitig absenken zu können. Wenn im hinteren Bereich des Aufbaus nach dem Beladen noch ein erheblicher Abstand zwischen der Ladung und dem Dach verbleibt, kann der hintere Teil des Dachs abgesenkt werden, so dass der Aufbau, während das Nutzfahrzeug fährt, weniger Luftwiderstand erzeugt. Wenn das Nutzfahrzeug mit dem Dach im hinteren Bereich des Aufbaus sowohl in einer oberen als auch in einer unteren Stellung verfahren werden können soll, muss die Seitenplane so ausgebildet werden, dass die Seitenwand auch mit dem Dach in der oberen Stellung durch die Seitenplane verschlossen werden kann. Gleichzeitig muss der Aufbau so ausgebildet sein, dass der überschüssige Teil der Seitenplane mit dem Dach in der unteren Stellung beim Schließen der Seitenwand und beim Verfahren des Nutzfahrzeugs nicht störend für die Ladung oder den Luftwiderstand angeordnet ist. Aus diesem Grunde werden die Seitenplanen bei Aufbauten mit höhenverstellbaren Dächern nicht in einer sonst üblichen rechteckigen Form, sondern mit einer davon abweichenden Form ausgebildet.

Insbesondere wenn das Dach am hinteren Ende in einem erheblichen Umfang angehoben und wieder abgesenkt werden kann, treten in der Praxis unterschiedliche Probleme auf. Wenn das Dach am hinteren Ende weit abgesenkt worden ist, kann der überschüssige Teil der Seitenplane für den Fahrtwind eine nennenswerte Angriffsfläche bieten, so dass der aerodynamische Vorteil des hinten abgesenkten Dachs vermindert wird. Zudem kann die Seitenplane in der geschlossenen Stellung Falten an der Seitenwand werfen, die dem Fahrtwind einen zusätzlichen Widerstand entgegenstellen, der den aerodynamischen Vorteil des hinten abgesenkten Dachs mithin ebenfalls vermindert.

Daher liegt der vorliegenden Erfindung die Aufgabe zugrunde, die Seitenplanen und den Aufbau jeweils der eingangs genannten und zuvor näher erläuterten Art derart auszugestalten und weiterzubilden, dass eine verbesserte Aerodynamik des Aufbaus bereitgestellt werden kann.

Diese Aufgabe ist bei einer Seitenplane nach dem Oberbegriff von Anspruch 1 dadurch gelöst, dass in der Projektionsstellung das obere Ende des vorderen Rands gegenüber dem oberen Ende des hinteren Rands nach außen vorsteht und das untere Ende des hinteren Rands gegenüber dem unteren Ende des vorderen Rands nach außen vorsteht.

Zudem ist die genannte Aufgabe durch einen Aufbau nach dem Oberbegriff von Anspruch 8 dadurch gelöst, dass die wenigstens eine Seitenplane eine Seitenplane nach einem der Ansprüche 1 bis 7 ist.

Die Seitenplane umfasst ein flächiges Planenmaterial, mit dem die zugeordnete Seitenwand verschlossen werden kann. Das Planenmaterial weist zudem eine Mehrzahl von Rändern auf, die das Planenmaterial bzw. die Seitenplane begrenzen. So existiert ein vorderer Rand, der in der geschlossenen Stellung der Seitenplane dem vorderen Ende der Seitenwand zugeordnet sein kann, und ein hinterer Rand, der in der geschlossenen Stellung der Seitenplane dem hinteren Ende der Seitenwand zugeordnet sein kann. Zudem ist ein oberer Rand vorgesehen, der dem Längsholm zugeordnet sein kann und den vorderen Rand mit dem hinteren Rand verbindet. Im Übrigen ist auch ein unterer Rand vorgesehen, der dem Ladeboden des Aufbaus zugeordnet sein kann und ebenfalls den vorderen Rand mit dem hinteren Rand verbindet.

Die entsprechende Seitenplane kann ferner in eine geglättete Stellung gebracht werden, die sich dadurch auszeichnet, dass das Planenmaterial, der vordere Rand, der hintere Rand, der untere Rand und der obere Rand wenigstens im Wesentlichen einer gemeinsamen Planenebene angeordnet sind. Bedarfsweise sind der vordere Rand und/oder der hintere Rand der Seitenplane mit einem Keder versehen, so dass der entsprechende Rand dicker sein kann als das Planenmaterial. Zudem können auch am oberen Rand und/oder am unteren Rand noch Mittel, etwa zum Verschieben oder Spannen der Seitenplane, angeordnet sein, die gegenüber dem Planenmaterial seitlich vorstehen können. Dies und andere Abweichungen von einer vollständig ebenen Ausrichtung der Seitenplane können bevorzugt toleriert werden. Die Seitenplane ist insgesamt dennoch wenigstens im Wesentlichen in der Planenebene angeordnet. Mit der Seitenplane in der geglätteten Stellung ist das Planenmaterial zudem aber faltenfrei angeordnet.

Wenn die Seitenplane in der geglätteten Stellung angeordnet ist, kann zudem für die Seitenplane eine Projektionsstellung des vorderen Rands und des hinteren Rands definiert werden. Diese Projektionsstellung ergibt sich dabei aus der geglätteten Stellung durch eine Projektion des vorderen Rands und des hinteren Rands aufeinander wobei die Projektion des vorderen Rand und des hinteren Rands aufeinander parallel zur Planenebene sowie senkrecht zum vorderen Rand und/oder zum hinteren Rand erfolgt. Der vordere Rand und der hintere Rand müssen mithin nicht unbedingt parallel sein, sondern können etwas von einer Parallelität abweichen. Trotzdem kann aber die beschriebene Projektion des vorderen Rands auf den hinteren Rand, des hinteren Rands auf den vorderen Rand oder der beiden Ränder aufeinander in einer vorbestimmten Richtung erfolgen, die dementsprechend nicht senkrecht zu beiden Rändern sein muss aber senkrecht zu wenigstens einem der beiden Ränder ist. Wird diese Projektion in entsprechender Weise gedanklich durchgeführt, ist es bei der jeweiligen Seitenplane dann so, dass der vordere Rand und der hintere Rand in der Projektionsstellung nur teilweise deckungsgleich zueinander angeordnet und zudem in der Längsrichtung der Projektion teilweise versetzt zueinander positioniert sind. Dies führt dazu, dass in der Projektionsstellung das obere Ende des vorderen Rands gegenüber dem oberen Ende des hinteren Rands nach außen vorsteht und zudem analog das untere Ende des hinteren Rands gegenüber dem unteren Ende des vorderen Rands nach außen vorsteht.

Bei einer entsprechenden Ausgestaltung der Seitenplane wird der überschüssige Anteil der Seitenplane in der geschlossenen Stellung mit abgesenkten Dach verringert und zudem in der geschlossenen Stellung sowohl bei abgesenktem Dach als auch bei nicht abgesenktem Dach eine wenigstens im Wesentlichen faltenfreie Anordnung der Seitenplane ermöglicht. Auf diese Weise kann ein besonders aerodynamischer Aufbau bereitgestellt werden.

Der besseren Verständlichkeit halber und zur Vermeidung unnötiger Wiederholungen werden nachfolgend die Seitenplane und der Aufbau gemeinsam beschrieben, ohne jeweils im Einzelnen zwischen der Seitenplane und dem Aufbau zu unterscheiden. Für den Fachmann ergibt sich jedoch aus dem jeweiligen Kontext, welches Merkmal jeweils in Bezug auf die Seitenplane und den Aufbau besonders bevorzugt ist.

Bei einer ersten besonders bevorzugten Ausgestaltung der Seitenplane steht in der Projektionsstellung das obere Ende des vorderen Rands gegenüber dem oberen Ende des hinteren Rands um wenigstens 10 cm, vorzugsweise wenigstens 20 cm, insbesondere wenigstens 30 cm, nach außen vor. Auf diese Weise wird ermöglicht dass das Dach des Aufbaus sehr weit nach unten abgesenkt werden kann, um den Luftwiderstand des Aufbaus zu verringern, ohne dass diese Verringerung des Luftwiderstands zu einem nennenswerten Teil von der Seitenplane begrenzt wird. Aus demselben Grund ist es alternativ oder zusätzlich bevorzugt, wenn in der Projektionsstellung das untere Ende des hinteren Rands gegenüber dem unteren Ende des vorderen Rands um wenigstens 10 cm, vorzugsweise wenigstens 20 cm, insbesondere wenigstens 30 cm, nach außen vorsteht.

Die Kontur des Aufbaus kann bedarfsweise an unterschiedliche Gegebenheiten, wie etwa die Ladung und die Zugmaschine, angepasst werden, um den Luftwiderstand zu minimieren. Damit dies erfolgen kann, kann es sich anbieten, dass der vordere Rand und der hintere Rand eine Längendifferenz aufweist. Hierdurch können aber auch Nachteile hinsichtlich der faltenfreien Anordnung der Seitenplane in der geschlossen Stellung sowie hinsichtlich der Herstellungskosten der Seitenplane hervorgerufen werden. Daher ist es grundsätzlich bevorzugt, wenn die Längendifferenz zwischen dem vorderen Rand und dem hinteren Rand weniger als 20 cm, vorzugsweise weniger als 10 cm, insbesondere weniger als 5 cm, beträgt. Eine sehr kostengünstige und einfach zu handhabende Seitenplane kann bedarfsweise erhalten werden, wenn der vordere Rand und der hintere Rand wenigstens im Wesentlichen gleich lang sind.

Für die Handhabung und ein faltenfreies Verschließen der Seitenwand kann es bei bestimmten Aufbauten zweckdienlich sein, wenn in der geglätteten Stellung der obere Rand zwischen dem vorderen Rand und dem hinteren Rand eine geradlinige Erstreckung aufweist. Alternativ oder zusätzlich kann es sich aus dem genannten Grund anbieten, wenn in der geglätteten Stellung der untere Rand zwischen dem vorderen Rand und dem hinteren Rand eine geradlinige Erstreckung aufweist.

Für die Handhabung und ein faltenfreies Verschließen der Seitenwand kann es bei anderen Aufbauten dagegen zweckdienlich sein, wenn in der geglätteten Stellung der obere Rand zwischen dem vorderen Rand und dem hinteren Rand eine geschwungene Erstreckung aufweist. Alternativ oder zusätzlich kann es sich bei anderen Aufbauten anbieten, wenn in der geglätteten Stellung der untere Rand zwischen dem vorderen Rand und dem hinteren Rand eine geschwungene Erstreckung aufweist.

Zudem kann die Seitenplane sehr einfach und zweckmäßig in die geschlossene Stellung gebracht werden, wenn dem vorderen Rand und/oder dem hinteren Rand ein Keder zugeordnet ist. Dieser Keder kann dann in eine korrespondierende Kederleiste eingezogen werden, um die Seitenplane zu schließen. Es kann aber auch vorgesehen sein, dass wenigstens ein Keder formschlüssig in einem Planenspannrohr aufgenommen ist. Dann kann das Planenspannrohr in eine vordere Eckrunge oder hintere Eckrunge eingehängt werden, um die Seitenplane in die geschlossene Stellung zu verstellen. Dabei kann dann bedarfsweise zusätzlich wenigstens eine Planenspannrolle über eine Spanneinrichtung um ihre Längsachse gedreht werden. Dadurch lässt sich ein Stück des Planenmaterials auf dem Planenspannrohr aufwickeln und die Seitenplane mithin in der geschlossenen Stellung spannen bzw. stramm ziehen. Wenn das Planenspannrohr lediglich in eine vordere Eckrunge oder hintere Eckrunge eingehängt werden soll, um die Seitenplane dort mit dem entsprechenden Rand festzulegen, kann das Planenspannrohr auch als Teil einer Hakleiste ausgebildet sein. In diesem Fall kann das entsprechende Planenspannrohr auch deutlich von einer klassisch rohrförmigen Ausgestaltung abweisen. Ein teilweise rohrförmiger Charakter des Planenspannrohrs wird jedoch insoweit bevorzugt verbleiben, als dass der entsprechende Keder in dem als Planenspannrohr ausgebildeten Teil der Hakleiste angeordnet ist.

Bei einer ersten besonders bevorzugten Ausgestaltung des Aufbaus wird das Dach des Aufbaus am hinteren Ende des Aufbaus von hinteren Eckrungen getragen, wobei die hinteren Eckrungen höhenverstellbar sind. Die hinteren Eckrungen können mithin wenigstens zwischen einer verkürzten Stellung zur Positionierung des hinteren Endes des Dachs in einer niedrigen Stellung und wenigstens einer verlängerten Stellung zur Positionierung des hinteren Endes des Dachs in einer hohen Stellung verstellt werden. Auf diese Weise kann der Aufbau, sofern es die Ladung zulässt in eine aerodynamischere Form verstellt werden. Dabei kann es zur Erhöhung der Flexibilität des Verstellens der Form des Aufbaus zweckdienlich sein, wenn die hinteren Eckrungen zwischen der hohen Stellung und der niedrigen Stellung noch in wenigstens eine weitere Stellung verstellt werden können.

Damit das Dach bedarfsweise nach hinten abgesenkt bzw. nach hinten geneigt werden kann, um so den Luftwiderstand des Aufbaus zu verringern, kann das Dach des Aufbaus am vorderen Ende des Aufbaus von vorderen Eckrungen getragen werden, die dazu ausgebildet sind, in unveränderter Stellung das Dach zu tragen, und zwar egal ob die hinteren Eckrungen in der verlängerten Stellung oder in der verkürzten Stellung angeordnet sind. So kann der Aufbau sehr flexibel genutzt werden und an die jeweiligen Umstände des Transports angepasst werden.

Zudem können die vorderen Eckrungen wenigstens zwischen einer verkürzten Stellung zur Positionierung des vorderen Endes des Dachs in einer niedrigen Stellung und wenigstens einer verlängerten Stellung zur Positionierung des vorderen Endes des Dachs in einer hohen Stellung höhenverstellbar ausgebildet sind. Dies erlaubt eine noch flexiblere Nutzung des Aufbaus und Anpassung an die jeweiligen Umstände des Transports.

Grundsätzlich bietet es sich an, wenn der Aufbau in eine Verfahrstellung oder mehrere Verfahrstellungen verstellt werden kann, in der der Aufbau geeignet ist, über den öffentlichen Straßenverkehr zum Ladungstransport verfahren zu werden. Dies gilt umso mehr für den Fall, dass der Aufbau in wenigstens eine Verfahrstellung mit der Seitenplane in der geschlossenen Stellung und mit einem gegenüber dem vorderen Ende des Dachs um wenigstens 10 cm, vorzugsweise wenigstens 20 cm, insbesondere wenigstens 30 cm, abgesenkten hinteren Ende des Dachs verstellbar ist. So erzeugt der Aufbau in der entsprechenden wenigstens eine Verfahrstellung nur einen sehr geringen Luftwiderstand. Alternativ oder zusätzlich kann der Aufbau aber auch in wenigstens eine Verfahrstellung mit der Seitenplane in der geschlossenen Stellung und mit dem Dach wenigstens im Wesentlichen in einer horizontalen Ausrichtung verstellbar sein. So lässt sich der Laderaum des Aufbaus möglichst umfassend für den Ladungstransport ausnutzen.

Zum einfachen und zuverlässigen Verschließen der Seitenwand durch die Seitenplane bietet es sich an, wenn die Seitenplane in der geschlossenen Stellung mit dem vorderen Rand an einer vorderen Eckrunge und mit dem hinteren Rand an einer hinteren Eckrunge festgelegt ist.

Aus demselben Grund kann alternativ oder zusätzlich der vordere Rand des Planenmaterials mit einem Keder formschlüssig in einem vorderen Planenspannrohr oder einer vorderen Hakleiste oder einer vorderen Kederleiste aufgenommen sein. Dabei bietet es sich dann weiter an, wenn in der die Seitenwand verschließenden geschlossenen Stellung der Seitenplane das vordere Planenspannrohr an einer vorderen Eckrunge festgelegt ist. Im Falle einer Hakleiste oder einer Kederleiste sind diese ebenfalls bevorzugt an der vorderen Eckrunge vorgesehen.

Zum einfachen und zuverlässigen Verschließen der Seitenwand durch die Seitenplane kann es alternativ oder zusätzlich zweckmäßig sein, wenn der hintere Rand des Planenmaterials mit einem Keder formschlüssig in einem hinteren Planenspannrohr oder einer hinteren Hakleiste oder einer hinteren Kederleiste aufgenommen ist. Dies gilt umso mehr in dem Fall, dass in der die Seitenwand verschließenden geschlossenen Stellung der Seitenplane das hintere Planenspannrohr an einer hinteren Eckrunge festgelegt ist. Im Falle einer Hakleiste oder einer Kederleiste sind diese ebenfalls bevorzugt an der hinteren Eckrunge vorgesehen.

Nachfolgend wird die Erfindung anhand einer lediglich ein Ausführungsbeispiel darstellenden Zeichnung näher erläutert. In der Zeichnung zeigt
- Fig. 1A-B: ein erfindungsgemäßer Aufbau eines Nutzfahrzeugs in einer hohen und einer niedrigen Stellung mit einer erfindungsgemäßen Seitenplane in einer perspektivischen Darstellung,
- Fig. 2A-B: die Seitenplane aus Fig. 1 in einer geglätteten Stellung in einer Draufsicht und in einer Schnittansicht entlang der Schnittebene IIB-IIB aus Fig. 3A und
- Fig. 3A-B: der vordere Rand und der hintere Rand der Seitenplane aus Fig. 1 in einer Projektionsstellung in einer schematischen Draufsicht.

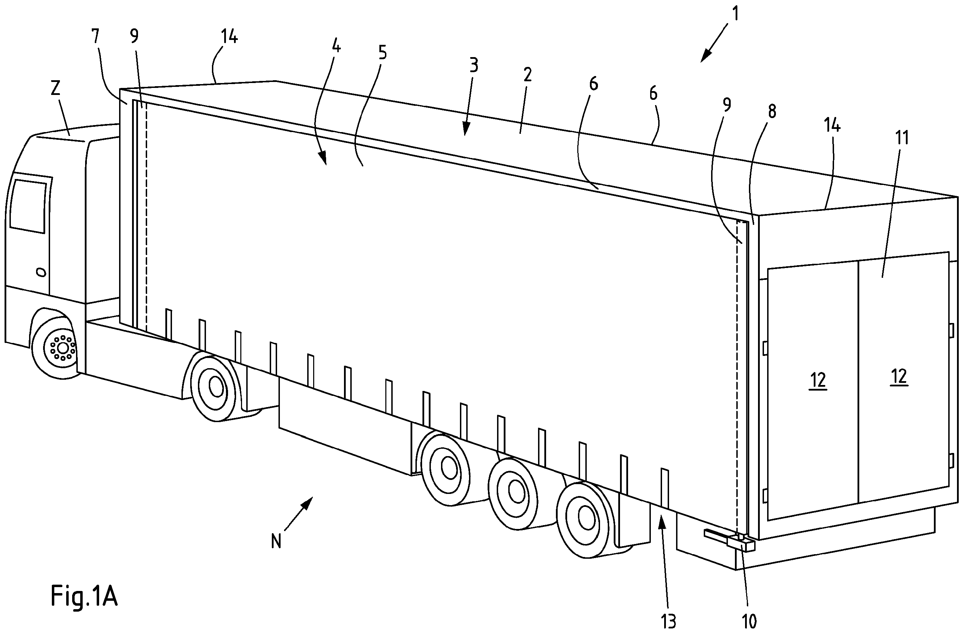

In der Fig. 1A ist ein von einer Zugmaschine Z gezogenes Nutzfahrzeug N in Form eines Sattelaufliegers dargestellt. Das Nutzfahrzeug N weist einen Aufbau 1 in Form eines Planenaufbaus, insbesondere Curtainsiders, auf. Der Aufbau 1 weist eine Plane 2 am Dach 3 und jeweils eine Seitenplane 4 an den beiden Seitenwänden 5 des Aufbaus 1 auf. Die beiden Seitenplanen 4 an den Seitenwänden 5 können entlang von Längsholmen 6 nach vorne oder nach hinten verschoben werden, um die Seitenwand 5 wahlweise zu öffnen und zu schließen. In der geschlossenen Stellung der Seitenplane 4 ist die Seitplane 4 an einer vorderen Eckrunge 7 und an einer hinteren Eckrunge 8 festgelegt, während die Seitenplane 4 in der geöffneten Stellung die Seitenwand 5 zum Be- und Entlanden des Laderaums des Aufbaus 1 freigibt. Zu diesem Zweck sind an der Seitenplane 4 noch Planenspannrohre 9 vorgesehen, die in die vordere Eckrunge 7 und die hintere Eckrunge 8 eingehängt werden können. Bei dem vorderen Planenspannrohr 9 kann es sich auch um ein sogenanntes Hakprofil handeln. Das Planenspannrohr 9 oder das Hakprofil werden in die vordere Eckrunge 7 eingehängt, wie das hintere Planenspannrohr 9 in die hintere Eckrunge 8 eingehängt wird. An der hinteren Eckrunge 8 ist bei dem dargestellten und insoweit bevorzugten Aufbau 1 eine Spanneinrichtung 10 vorgesehen, mit der das dort eingehängte Planenspannrohr 9 um seine Längsachse gedreht werden kann, um einen Teil der Seitenplane 4 auf dem Planenspannrohr 9 aufzuwickeln und so die Seitenplane 4 zu spannen bzw. in der Längsrichtung des Aufbaus 1 stramm zu ziehen.

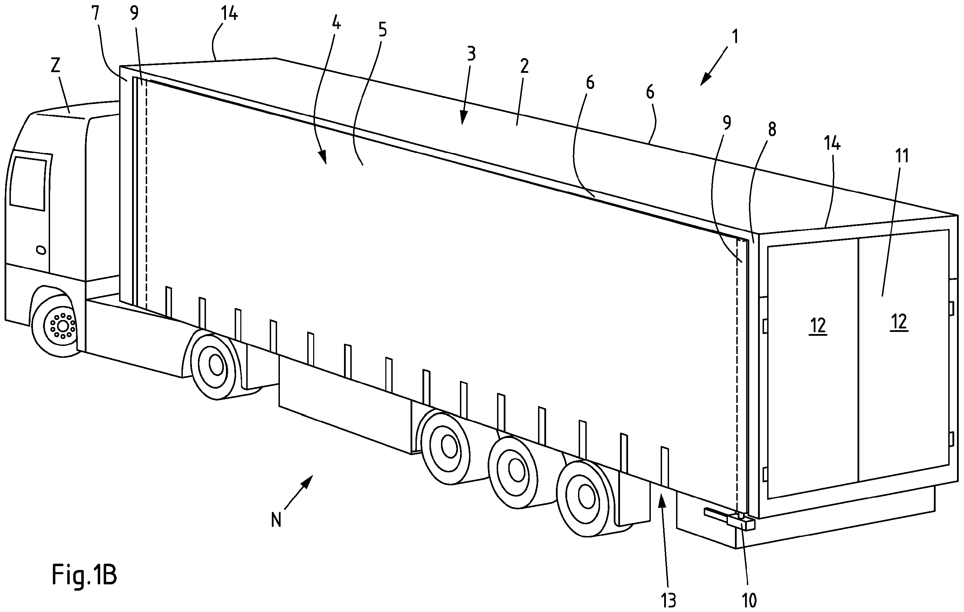

An der Rückwand 11 ist der Aufbau 1 durch Flügeltüren 12 bzw. Rückwandtüren verschlossen. Die vorderen Eckrungen 7 und die hinteren Eckrungen 8 tragen das Dach 3 des Aufbaus 1 und stützen das Dach 3 des Aufbaus 1 gegenüber einer Bodenstruktur 13 des Aufbaus 1 ab. Bei dem dargestellten und insoweit bevorzugten Aufbau 1 sind die vorderen Eckrungen 7 und die hinteren Eckrungen 8 jeweils mit einem Querträger 14 des Dachs 3 verbunden. Dabei sind bei dem dargestellten und insoweit bevorzugten Aufbau 1 die vorderen Eckrungen 7 und die hinteren Eckrungen 8 höhenverstellbar ausgebildet. Die vorderen Eckrungen 7 und die hinteren Eckrungen 8 können jeweils zwischen einer verkürzten Stellung zur Positionierung des angrenzenden Bereichs des Dachs 3 in einer niedrigen Stellung und wenigstens einer verlängerten Stellung zur Positionierung des entsprechenden Bereichs des Dachs 3 in einer hohen Stellung verstellt werden. Die vorderen Eckrungen 7 und die hinteren Eckrungen 8 können zu diesem Zweck einen an der Bodenstruktur 13 festgelegten Rungenkörper aufweisen, an oder in dem ein mit dem Dach 3 verbundener Rungenschiebling gehalten, der zum Verstellen des Dachs 3 teilweise gegenüber dem Rungenkörper ausgezogen und wieder eingeschoben werden kann. Insbesondere wenn das hintere Ende des Dachs 3 über die Verkürzung der hinteren Eckrungen 8 gegenüber dem vorderen Ende des Dachs 3 abgesenkt wird, kann der Luftwiderstand des Aufbaus 1 gesenkt werden. In der Fig. 1B ist der Aufbau 1 mit einem gegenüber der Fig. 1A am hinteren Ende entsprechend abgesenkten Dach 3 dargestellt.

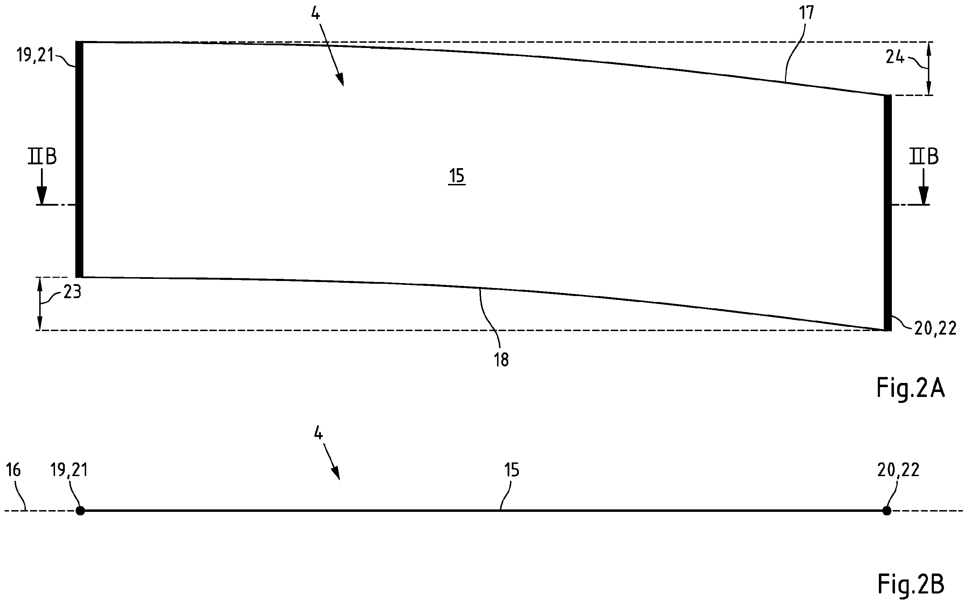

In den Fig. 2A-B ist eine Seitenplane 4 in einer geglätteten Stellung in einer Draufsicht und in einer Schnittansicht dargestellt. Die Seitenplane 4 umfasst dabei ein Planenmaterial 15, das flächig und wenigstens im Wesentlichen faltenfrei in einer Planenebene 16 angeordnet ist. Die Seitenplane 4 umfasst ferner einen oberen Rand 17, der dem Längsholm 6 zugeordnet werden kann, einen unteren Rand 18, der der Bodenstruktur 13 zugeordnet werden kann, einen vorderen Rand 19, der der vorderen Eckrunge 7 zugeordnet werden kann, und einen hinteren Rand 20, der der hinteren Eckrunge 8 zugeordnet werden kann. An dem vorderen Rand 19 und dem hinteren Rand 20 ist zudem ein Keder 21,22 vorgesehen, der jeweils in ein Planenspannrohr 9, eine Hakleiste oder einer Kederleiste aufgenommen sein kann. Die genannten Ränder 17-20 sind in der geglätteten Stellung wie das Planenmaterial 15 wenigstens im Wesentlichen in der Planenebene 16 angeordnet.

In der geglätteten Stellung ist der obere Rand 17 und der untere Rand 18 geschwungen ausgebildet und erstreckt sich von vorne betrachtet nach unten in Richtung des unteren Rands 18 bzw. weg von dem oberen Rand 17. Aufgrund dieser Konturen des oberen Rands 17 und des unteren Rands 18, ist der hintere Rand 20 gegenüber dem vorderen Rand 19 insgesamt nach unten versetzt. Da zudem der vordere Rand 19 und der hintere Rand 20 wenigstens im Wesentlichen gleichlang ausgebildet sind, beträgt dieser Versatz 23,24 des hinteren Rands 20 gegenüber dem vorderen Rand 19 der Seitenplane 4 sowohl angrenzend zum oberen Rand 17 als auch angrenzend zum unteren Rand 18 bei der dargestellten und insoweit bevorzugten Seitenplane etwa 30 cm.

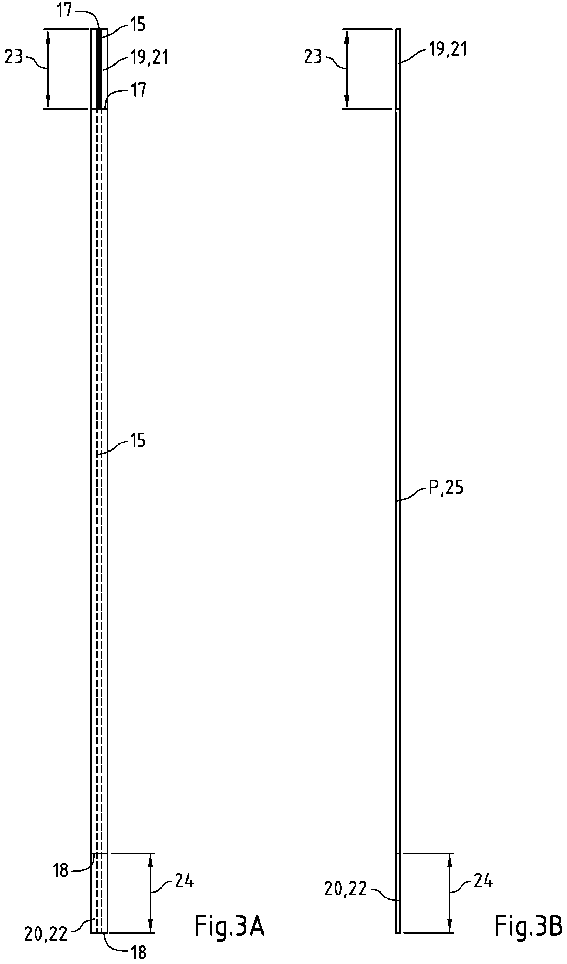

In der Fig. 3A ist der Versatz 23,24 des vorderen Rands 19 gegenüber dem hinteren Rand 20 in Längsrichtung der beiden Ränder 19,20 in einer Seitenansicht parallel zur Planenebene 16 und von hinten gesehen dargestellt. Der vordere Rand 19 der Seitenplane 4 steht mithin in der Darstellung der Fig. 3A gegenüber dem hinteren Rand 20 der Seitenplane 4 nach oben, also nach außen um etwa 30 cm vor. Analog steht der hintere Rand 20 der Seitenplane 4 gegenüber dem vorderen Rand 19 der Seitenplane 4 um etwa 30 cm nach unten, also ebenfalls nach außen vor.

In der Fig. 3B ist eine Projektionsstellung 25 der beiden Ränder 19,20 in einer Projektion P aufeinander dargestellt, bei der berücksichtigt ist, dass der vordere Rand 19 und der hintere Rand 20 der Seitenplane 4 nicht unbedingt parallel zueinander sein müssen, auch wenn sich der vordere Rand 19 bevorzugt ungefähr in dieselbe Richtung erstrecken wird wie der hintere Rand 20, die im verbauten Zustand der Seitenplane 4 in etwa der Vertikalen entsprechen wird. Die in der Fig. 3B dargestellte Projektion P erhält man, wenn man in der geglätteten Stellung der Seitenwand 4 gemäß den Fig. 2A-B den vorderen Rand 19 und den hinteren Rand 20 aufeinander projiziert, und zwar in der Planenebene 16 und in einer Richtung senkrecht zu dem vorderen Rand 19 und dem hinteren Rand 20. Der vordere Rand 19 und der hintere Rand 20 liegen in dieser Projektion P teilweise aufeinander. Gleichwohl steht der vordere Rand 19 auch in der Projektion P um etwa 30 cm gegenüber dem hinteren Rand 20 bezogen auf die Längserstreckung der Projektion P nach außen vor. Ebenso steht der hintere Rand 20 in der Projektion P bezogen auf die Längserstreckung der Projektion P um etwa 30 cm gegenüber dem vorderen Rand 19 nach außen vor.

### Bezugszeichenliste

- 1: Aufbau
- 2: Plane
- 3: Dach
- 4: Seitenplane
- 5: Seitenwand
- 6: Längsholm
- 7: vordere Eckrunge
- 8: hintere Eckrunge
- 9: Planenspannrohr
- 10: Spanneinrichtung
- 11: Rückwand
- 12: Flügeltür
- 13: Bodenstruktur
- 14: Querträger
- 15: Planenmaterial
- 16: Planenebene
- 17: oberer Rand
- 18: unterer Rand
- 19: vorderer Rand
- 20: hinterer Rand
- 21: Keder
- 22: Keder
- 23: Versatz
- 24: Versatz
- 25: Projektionsstellung
- P: Projektion
- N: Nutzfahrzeug
- Z: Zugmaschine

## Patentansprüche

1. Seitenplane (4) eines Planenaufbaus eines Nutzfahrzeugs (N), insbesondere Lastkraftwagen, Anhänger oder Sattelauflieger, mit einem flächigen Planenmaterial (15), wobei das Planenmaterial (15) einen vorderen Rand (19), einen dem vorderen Rand (19) gegenüberliegenden hinteren Rand (20), einen den vorderen Rand (19) mit dem hinteren Rand (20) verbindenden oberen Rand (17) und einen den vorderen Rand (19) mit dem hinteren Rand (20) verbindenden unteren Rand (18) aufweist, wobei in einer geglätteten Stellung der Seitenplane (4) mit dem Planenmaterial (15), dem vorderen Rand (19), dem hinteren Rand (20), dem oberen Rand (17) und dem unteren Rand (18) wenigstens im Wesentlichen in einer gemeinsamen Planenebene (16) das Planenmaterial (15) wenigstens im Wesentlichen faltenfrei angeordnet ist und wobei in der geglätteten Stellung der Seitenplane (4) der vordere Rand (19) und der hintere Rand (20) in einer Projektion (P) des vorderen Rands (19) und des hinteren Rands (20) in einer Richtung wenigstens im Wesentlichen parallel zur gemeinsamen Planenebene (16) sowie senkrecht zum vorderen Rand (19) und/oder zum hinteren Rand (20) aufeinander in einer Projektionsstellung (25) zueinander angeordnet sind,
**dadurch gekennzeichnet, dass** in der Projektionsstellung (25) das obere Ende des vorderen Rands (19) gegenüber dem oberen Ende des hinteren Rands (20) nach außen vorsteht und das untere Ende des hinteren Rands (20) gegenüber dem unteren Ende des vorderen Rands (19) nach außen vorsteht.

2. Seitenplane nach Anspruch 1,
**dadurch gekennzeichnet, dass** in der Projektionsstellung (25) das obere Ende des vordere Rands (19) gegenüber dem oberen Ende des hinteren Rands (20) um wenigstens 10 cm, vorzugsweise wenigstens 20 cm, insbesondere wenigstens 30 cm, nach außen vorsteht.

3. Seitenplane nach Anspruch 1 oder 2,
**dadurch gekennzeichnet, dass** in der Projektionsstellung (25) das untere Ende des hinteren Rands (20) gegenüber dem unteren Ende des vorderen Rands (19) um wenigstens 10 cm, vorzugsweise wenigstens 20 cm, insbesondere wenigstens 30 cm, nach außen vorsteht.

4. Seitenplane nach einem der Ansprüche 1 bis 3,
**dadurch gekennzeichnet, dass** der vordere Rand (19) und der hintere Rand (20) eine Längendifferenz von weniger als 20 cm, vorzugsweise weniger als 10 cm, insbesondere weniger als 5 cm, aufweisen und dass, vorzugsweise, der vordere Rand (19) und der hintere Rand (20) wenigstens im Wesentlichen gleich lang sind.

5. Seitenplane nach einem der Ansprüche 1 bis 4,
**dadurch gekennzeichnet, dass** in der geglätteten Stellung der obere Rand (17) zwischen dem vorderen Rand (19) und dem hinteren Rand (20) eine geradlinige Erstreckung aufweist und/oder dass in der geglätteten Stellung der untere Rand (18) zwischen dem vorderen Rand (19) und dem hinteren Rand (20) eine geradlinige Erstreckung aufweist.

6. Seitenplane nach einem der Ansprüche 1 bis 4,
**dadurch gekennzeichnet, dass** in der geglätteten Stellung der obere Rand (17) zwischen dem vorderen Rand (19) und dem hinteren Rand (20) eine geschwungene Erstreckung aufweist und/oder dass in der geglätteten Stellung der untere Rand (18) zwischen dem vorderen Rand (19) und dem hinteren Rand (20) eine geschwungene Erstreckung aufweist.

7. Seitenplane nach einem der Ansprüche 1 bis 6,
**dadurch gekennzeichnet, dass** dem vorderen Rand (19) und/oder dem hinteren Rand (20) ein Keder (21,22) zugeordnet ist und dass, vorzugsweise, der wenigstens eine Keder (21,22) formschlüssig in einem Planenspannrohr (9) aufgenommen ist.

8. Aufbau (1), insbesondere Curtainsider, eines Nutzfahrzeugs (N) mit wenigstens einem Längsholm (6) und wenigstens einer Seitenplane (4), wobei die Seitenplane (4) an dem Längsholm (6) längs des Längsholms (6) von einer eine Seitenwand (5) verschließenden geschlossenen Stellung in eine die Seitenwand (5) zum Be- und Entladen freigebende geöffnete Stellung verschiebbar aufgehängt ist,
**dadurch gekennzeichnet, dass** die wenigstens eine Seitenplane (4) eine Seitenplane (4) nach einem der Ansprüche 1 bis 7 ist.

9. Aufbau nach Anspruch 8,
**dadurch gekennzeichnet, dass** das Dach (3) des Aufbaus (1) am hinteren Ende des Aufbaus (1) von hinteren Eckrungen (8) getragen wird und dass die hinteren Eckrungen (8) wenigstens zwischen einer verkürzten Stellung zur Positionierung des hinteren Endes des Dachs (3) in einer niedrigen Stellung und wenigstens einer verlängerten Stellung zur Positionierung des hinteren Endes des Dachs (3) in einer hohen Stellung höhenverstellbar ausgebildet sind.

10. Aufbau nach Anspruch 9,
**dadurch gekennzeichnet, dass** das Dach (3) des Aufbaus (1) am vorderen Ende des Aufbaus (1) von vorderen Eckrungen (7) getragen wird und dass die vorderen Eckrungen (7) dazu ausgebildet sind, bei nach hinten geneigtem Dach (3) sowohl mit den hinteren Eckrungen (8) in der verlängerten Stellung als auch mit den hinteren Eckrungen (8) in der verkürzten Stellung in einer unveränderten Stellung angeordnet zu sein.

11. Aufbau nach Anspruch 10,
**dadurch gekennzeichnet, dass** die vorderen Eckrungen (7) wenigstens zwischen einer verkürzten Stellung zur Positionierung des vorderen Endes des Dachs (3) in einer niedrigen Stellung und wenigstens einer verlängerten Stellung zur Positionierung des vorderen Endes des Dachs (3) in einer hohen Stellung höhenverstellbar ausgebildet sind.

12. Aufbau nach einem der Ansprüche 8 bis 11,
**dadurch gekennzeichnet, dass** der Aufbau (1) in eine Verfahrstellung mit der Seitenplane (4) in der geschlossenen Stellung und mit einem gegenüber dem vorderen Ende des Dachs (3) um wenigstens 10 cm, vorzugsweise wenigstens 20 cm, insbesondere wenigstens 30 cm, abgesenkten hinteren Ende des Dachs (3) verstellbar ist und/oder dass der Aufbau (1) in eine Verfahrstellung mit der Seitenplane (4) in der geschlossenen Stellung und mit dem Dach (3) wenigstens im Wesentlichen in einer horizontalen Ausrichtung verstellbar ist.

13. Aufbau nach einem der Ansprüche 10 bis 12,
**dadurch gekennzeichnet, dass** die Seitenplane (4) in der geschlossenen Stellung mit dem vorderen Rand (19) an einer vorderen Eckrunge (7) und mit dem hinteren Rand (20) an einer hinteren Eckrunge (8) festgelegt ist.

14. Aufbau nach einem der Ansprüche 8 bis 13,
**dadurch gekennzeichnet, dass** der vordere Rand (19) des Planenmaterials (15) mit einem Keder (21) formschlüssig in einem vorderen Planenspannrohr (9) aufgenommen ist und dass, vorzugsweise, in der die Seitenwand (5) verschließenden geschlossenen Stellung der Seitenplane (4) das vordere Planenspannrohr (9) an einer vorderen Eckrunge (7) festgelegt ist.

15. Aufbau nach Anspruch 8 oder 14,
**dadurch gekennzeichnet, dass** der hintere Rand (20) des Planenmaterials (15) mit einem Keder (22) formschlüssig in einem hinteren Planenspannrohr (9) aufgenommen ist und dass, vorzugsweise, in der die Seitenwand (5) verschließenden geschlossenen Stellung der Seitenplane (4) das hintere Planenspannrohr (9) an einer hinteren Eckrunge (8) festgelegt ist.

## Claims

1. Side tarpaulin (4) of a tarpaulin structure of a utility vehicle (N), in particular a truck, trailer or semitrailer, with a flat tarpaulin material (15), wherein the tarpaulin material (15) has a front edge (19), a rear edge (20) opposite the front edge (19), an upper edge (17) connecting the front edge (19) to the rear edge (20) and a lower edge (18) connecting the front edge (19) to the rear edge (20), wherein, in a smoothed position of the side tarpaulin (4) with the tarpaulin material (15), the front edge (19), the rear edge (20), the upper edge (17) and the lower edge (18) at least substantially in a common tarpaulin plane (16), the tarpaulin material (15) is arranged at least substantially wrinkle-free, and wherein in the smoothed position of the side tarpaulin (4) the front edge (19) and the rear edge (20) are arranged, in a projection (P) of the front edge (19) and of the rear edge (20) in a direction at least substantially parallel to the common tarpaulin plane (16) and perpendicular to the front edge (19) and/or to the rear edge (20), relative to one another in a projection position (25),
**characterized in that**
in the projection position (25), the upper end of the front edge (19) projects outwards relative to the upper end of the rear edge (20) and the lower end of the rear edge (20) projects outwards relative to the lower end of the front edge (19).

2. Side tarpaulin according to claim 1,
**characterized in that**
in the projection position (25), the upper end of the front edge (19) projects outwards by at least 10 cm, preferably at least 20 cm, in particular at least 30 cm, relative to the upper end of the rear edge (20).

3. Side tarpaulin according to claim 1 or 2,
**characterized in that**
in the projection position (25), the lower end of the rear edge (20) projects outwards by at least 10 cm, preferably at least 20 cm, in particular at least 30 cm, relative to the lower end of the front edge (19).

4. Side tarpaulin according to one of claims 1 to 3,
**characterized in that**
the front edge (19) and the rear edge (20) have a difference in length of less than 20 cm, preferably less than 10 cm, in particular less than 5 cm, and that, preferably, the front edge (19) and the rear edge (20) have an at least substantially same length.

5. Side tarpaulin according to one of claims 1 to 4,
**characterized in that**
in the smoothed position, the upper edge (17) between the front edge (19) and the rear edge (20) has a rectilinear extension and/or that in the smoothed position, the lower edge (18) between the front edge (19) and the rear edge (20) has a rectilinear extension.

6. Side tarpaulin according to one of claims 1 to 4,
**characterized in that**
in the smoothed position, the upper edge (17) between the front edge (19) and the rear edge (20) has a curved extension and/or that in the smoothed position, the lower edge (18) between the front edge (19) and the rear edge (20) has a curved extension.

7. Side tarpaulin according to one of claims 1 to 6,
**characterized in that**
a bolt rope (21, 22) is associated with the front edge (19) and/or the rear edge (20) and **in that**, preferably, the at least one bolt rope (21, 22) is positively received in a tarpaulin tensioning tube (9).

8. Structure (1), in particular curtainsider, of a utility vehicle (N) with at least one longitudinal cross member (6) and at least one side tarpaulin (4), wherein the side tarpaulin (4) is suspended on the longitudinal cross member (6) along the longitudinal cross member(6) in a manner displaceable from a closed position closing a side wall (5) into an open position releasing the side wall (5) for loading and unloading,
**characterized in that**
the at least one side tarpaulin (4) is a side tarpaulin (4) according to one of claims 1 to 7.

9. Structure according to claim 8,
**characterized in that**
the roof (3) of the structure (1) is supported at the rear end of the structure (1) by rear corner stanchions (8) and that the rear corner stanchions (8) are configured to be height-adjustable at least between a shortened position for positioning the rear end of the roof (3) in a low position and at least an extended position for positioning the rear end of the roof (3) in a high position.

10. Structure according to claim 9,
**characterized in that**
the roof (3) of the structure (1) is supported at the front end of the structure (1) by front corner stanchions (7), and that the front corner stanchions (7) are configured to be arranged in an unchanged position when the roof (3) is inclined rearwardly both with the rear corner stanchions (8) in the extended position and with the rear corner stanchions (8) in the shortened position.

11. Structure according to claim 10,
**characterized in that**
the front corner stanchions (7) are configured to be height-adjustable at least between a shortened position for positioning the front end of the roof (3) in a low position and at least one extended position for positioning the front end of the roof (3) in a high position.

12. Structure according to one of claims 8 to 11,
**characterized in that**
the structure (1) is moveable into a travel position with the side tarpaulin (4) in the closed position and with a rear end of the roof (3) lowered by at least 10 cm, preferably at least 20 cm, in particular at least 30 cm, relative to the front end of the roof (3), and/or **in that** the structure (1) can be moved into a travel position with the side tarpaulin (4) in the closed position and with the roof (3) at least substantially in a horizontal orientation.

13. Structure according to one of claims 10 to 12,
**characterized in that**
the side tarpaulin (4) is fixed in the closed position with the front edge (19) at a front corner stanchion (7) and with the rear edge (20) at a rear corner stanchion (8).

14. Structure according to one of claims 8 to 13,
**characterized in that**
the front edge (19) of the tarpaulin material (15) is positively received with a bolt rope (21) in a front tarpaulin tensioning tube (9) and that, preferably, in the closed position of the side tarpaulin (4) closing the side wall (5), the front tarpaulin tensioning tube (9) is fixed to a front corner stanchion (7).

15. Structure according to claim 8 or 14,
**characterized in that**
the rear edge (20) of the tarpaulin material (15) is positively received with a bolt rope (22) in a rear tarpaulin tensioning tube (9) and that, preferably, in the closed position of the side tarpaulin (4) closing the side wall (5), the rear tarpaulin tensioning tube (9) is fixed to a rear corner stanchion (8).

## Revendications

1. Bâche latérale (4) d'une structure de bâche d'un véhicule utilitaire (N), en particulier un camion, une remorque ou une semi-remorque, avec un matériau de bâche plat (15), où le matériau de bâche (15) a un bord avant (19), un bord arrière (20) opposé au bord avant (19), un bord supérieur (17) reliant le bord avant (19) au bord arrière (20) et un bord inférieur (18) reliant le bord avant (19) au bord arrière (20), où le matériau de bâche (15) est configuré au moins essentiellement sans plis dans une position lissée de la bâche latérale (4) avec le matériau de bâche (15), le bord avant (19), le bord arrière (20), le bord supérieur (17) et le bord inférieur (18), au moins essentiellement dans un plan de bâche commun (16), et où, dans la position lissée de la bâche latérale (4), le bord avant (19) et le bord arrière (20) sont configurés l'un par rapport à l'autre dans une projection (P) du bord avant (19) et du bord arrière (20) dans une direction au moins essentiellement parallèle au plan de bâche commun (16) ainsi que perpendiculaire par rapport au bord avant (19) et/ou au bord arrière (20) dans une position de projection (25),
**caractérisée en ce que**
dans la position de projection (25), l'extrémité supérieure du bord avant (19) est en saillie extérieur par rapport à l'extrémité supérieure du bord arrière (20) et l'extrémité inférieure du bord arrière (20) est en saillie extérieur par rapport à l'extrémité inférieure du bord avant (19).

2. Bâche latérale selon la revendication 1,
**caractérisée en ce que**
dans la position de projection (25), l'extrémité supérieure du bord avant (19) est en saillie extérieur d'au moins 10 cm, de préférence d'au moins 20 cm, en particulier d'au moins 30 cm, par rapport à l'extrémité supérieure du bord arrière (20).

3. Bâche latérale selon la revendication 1 ou 2,
**caractérisée en ce que**
dans la position de projection (25), l'extrémité inférieure du bord arrière (20) est en saillie extérieur d'au moins 10 cm, de préférence d'au moins 20 cm, en particulier d'au moins 30 cm, par rapport à l'extrémité inférieure du bord avant (19).

4. Bâche latérale selon l'une des revendications 1 à 3,
**caractérisée en ce que**
le bord avant (19) et le bord arrière (20) ont une différence de longueur inférieure à 20 cm, de préférence inférieure à 10 cm, en particulier inférieure à 5 cm, et que, de préférence, le bord avant (19) et le bord arrière (20) sont au moins essentiellement de même longueur.

5. Bâche latérale selon l'une des revendications 1 à 4,
**caractérisée en ce que**
dans la position lissée, le bord supérieur (17) a une extension rectiligne entre le bord avant (19) et le bord arrière (20) et/ou que, dans la position lissée, le bord inférieur (18) a une extension rectiligne entre le bord avant (19) et le bord arrière (20).

6. Bâche latérale selon l'une des revendications 1 à 4,
**caractérisée en ce que**
dans la position lissée, le bord supérieur (17) a une extension galbée entre le bord avant (19) et le bord arrière (20) et/ou que, dans la position lissée, le bord inférieur (18) a une extension galbée entre le bord avant (19) et le bord arrière (20).

7. Bâche latérale selon l'une des revendications 1 à 6,
**caractérisée en ce que**
un bourrelet (21, 22) est associé au bord avant (19) et/ou au bord arrière (20) et que, de préférence, le au moins un bourrelet (21, 22) est logé, par liaison de forme, dans un tube de tension de bâche (9).

8. Structure (1), en particulier un curtainsider, d'un véhicule utilitaire (N) avec au moins un longeron (6) et au moins une bâche latérale (4), où la bâche latérale (4) est suspendue de manière coulissante au longeron (6) le long du longeron (6) entre une position fermée refermant une paroi latérale (5) et une position ouverte dégageant la paroi latérale (5) pour chargement et déchargement,
**caractérisée en ce que**
le au moins une bâche latérale (4) est une bâche latérale (4) selon l'une des revendications 1 à 7.

9. Structure selon la revendication 8,
**caractérisée en ce que**
le toit (3) de la structure (1) est porté à l'extrémité arrière de la structure (1) par des ranches d'angle arrière (8) et que les ranches d'angle arrière (8) sont configurés réglables en hauteur au moins entre une position raccourcie pour le positionnement de l'extrémité arrière du toit (3) dans une position basse et au moins une position allongée pour le positionnement de l'extrémité arrière du toit (3) dans une position haute.

10. Structure selon la revendication 9,
**caractérisée en ce que**
le toit (3) de la structure (1) est porté au niveau de l'extrémité avant de la structure (1) par des ranches d'angle avant (7) et que les ranches d'angle avant (7) sont configurés pour être arrangées dans une position inchangée lorsque le toit est incliné vers l'arrière (3), aussi bien avec les ranches d'angle arrière (8) en position allongée qu'avec les ranches d'angle arrière (8) en position raccourcie.

11. Structure selon la revendication 10,
**caractérisée en ce que**
les ranches d'angle avant (7) sont configurés réglables en hauteur au moins entre une position raccourcie pour le positionnement de l'extrémité avant du toit (3) dans une position basse et au moins une position allongée pour le positionnement de l'extrémité avant du toit (3) dans une position haute.

12. Structure selon l'une des revendications 8 à 11,
**caractérisée en ce que**
la structure (1) est réglable dans une position de déplacement avec la bâche latérale (4) en position fermée et avec une extrémité arrière du toit (3) abaissée d'au moins 10 cm, de préférence d'au moins 20 cm, en particulier d'au moins 30 cm, par rapport à l'extrémité avant du toit (3) et/ou que la structure (1) est réglable dans une position de déplacement avec la bâche latérale (4) en position fermée et avec le toit (3) au moins essentiellement dans un alignement horizontal.

13. Structure selon l'une des revendications 10 à 12,
**caractérisée en ce que**
la bâche latérale (4) est fixée, en position fermée, avec le bord avant (19) sur une ranche d'angle avant (7) et avec le bord arrière (20) sur une ranche d'angle arrière (8).

14. Structure selon l'une des revendications 8 à 13,
**caractérisée en ce que**
le bord avant (19) du matériau de bâche (15) est logé, par liaison de forme, avec un bourrelet (21) dans un tube de tension de bâche avant (9) et que, de préférence, dans la position fermée refermant la paroi latérale (5) de la bâche latérale (4), le tube de tension de bâche avant (9) est fixé sur une ranche d'angle avant (7).

15. Structure selon la revendication 8 ou 14,
**caractérisée en ce que**
le bord arrière (20) du matériau de bâche (15) est logé, par liaison de forme, avec un bourrelet (22) dans un tube de tension de bâche arrière (9) et que, de préférence, dans la position fermée refermant la paroi latérale (5) de la bâche latérale (4), le tube de tension de bâche arrière (9) est fixé sur une ranche d'angle arrière (8).
